# EUROPEAN PATENT SPECIFICATION

(11) **EP 0 525 687 B1**
(45) Date of publication and mention of the grant of the patent: **22.05.1996**
(21) Application number: 92112737.9
(22) Date of filing: 24.07.1992
(51) Int. Cl.: C08F 214/22

(54) **Ionically vulcanizable fluoroelastomeric copolymers**
Ionisch vulkanisierbare, fluorelastomere Copolymere
Copolymères fluoro-élastomères vulcanisables ioniques

(30) Priority: 24.07.1991 IT MI912041
(43) Date of publication of application: 03.02.1993
(73) Proprietor: AUSIMONT S.p.A., I-20100 Milano (IT)
(72) Inventor: Arcella, Vincenzo, I-28100 Novara (IT); Brinati, Giulio, I-20123 Milan (IT); Albano, Margherita, I-20131 Milan (IT); Minutillo, Anna, I-20127Milan (IT); Chiodini, Graziella, I-21047 Saronno, Varese (IT)
(74) Representative: Zumstein, Fritz, Dr.

(56) References cited:
- EP-A- 0 002 809
- EP-A- 0 407 937
- EP-B- 0 211 251
- DE-C- 2 457 102

## Description

### THE PRIOR ART

The present invention relates to fluoroelastomeric copolymers based on monomeric units deriving from vinylidene fluoride (VDF) , which are ionically vulcanizable and are suitable for the production of "shaft seals" and "fuel hoses".

As known, the preparation of such articles requires elastomeric materials exhibiting an optimal combination of the following characteristics: good resistance properties to motor oils and/or gasoline, good resistance properties to high temperatures as well as good low temperature performance, and, in particular, for manufactured articles such as "shaft seals", good mold processability, both in compression molding and injection molding, and finally a good vulcanization rate.

It is known for said articles the use of fluoroelastomeric copolymers consisting of VDF, perfluoroalkylvinylether (PAVE) and tetrafluoroethylene (TFE) monomeric units containing small amounts of bromine containing olefin, or bromoalkylvinylethers, vulcanizable by free radical with peroxides and crosslinking agents.

Said copolymers possess good low temperature characteristics, but present several disadvantages (drawbacks), due to their poor processability, which renders them not suitable for use in the manufacture of "shaft seals".

In addition they can be vulcanized only by peroxides, with all the inconveniences associated to this vulcanization method, such as for instance the need of accurate temperature control in compounding operations and the short "scorch" time and thermal activation time.

EP-B-211, 251 relates to a process for preparing curable fluoroelastomers which comprises reacting 35-80% mole of VDF, 15-35% mole of HFP, 0-30% mole of another comonomer selected from fluoroolefins and/or perfluorovinyl ethers, and from 0.01 to 1% mole of a brominated fluorovinyl ether, in the presence of a polymerization initiator and of a bromine-containing chain-transfer agent. The obtained bromine-containing fluoroelastomer can be cured by means of peroxides. No reference is made to the possibility of obtaining ionically curable fluoroelastomers having superior resistance to alcohols and alcohol-containing gasolines.

Elastomeric copolymers consisting of VDF, HFP, PAVE and TFE monomeric units and containing VDF in an amount of at least 48% by weight, are described in FR-B-2,259,849 and FR-B-2,347,389. These copolymers however show unsatisfactory chemical resistance to motor oils and gasolines containing alcohols, and further possess poor mold processability, so that they are less suitable for use in the preparation of the manufactured articles mentioned above.

### THE PRESENT INVENTION

It is the object of the present invention to provide fluoroelastomeric copolymers which are suitable for the manufacture of "shaft seals" and "fuel hoses", and therefore possess the combination of the above listed properties, while being at the same time vulcanizable by ionic methods with a good vulcanization rate.

Said copolymers, which form the object of the present invention, are characterized by comprising the following composition of monomeric units by weight:

| | |
|---|---|
| VDF | 30-47% |
| HFP (hexafluoropropene) | 18-40% |
| PAVE | 3-20% |
| TFE | 10-30% |

the sum of HFP + PAVE being maximum 50%, and minimum 27%.

Among the copolymers which form the object of the present invention, particularly suitable for the preparation of articles intended for contact with motor oils, such as "shaft seals" and "valve steam seals", are those having the following composition of monomeric units by weight:

| | |
|---|---|
| VDF | 40-47% |
| HFP | 18-40% |
| PAVE | 3-12% |
| TFE | 15-25% |

the sum of HFP + PAVE having the maximum and minimum values indicated above and the preferred PAVE contents being comprised between 3 and 9%, but even more preferably between 5 and 8%.

Copolymers having this composition combine a good chemical resistance with a high vulcanization rate, which is an essential requirement in processing technology, such as injection molding. Furthermore they exhibit optimum molding characteristics, in terms of releasability of molded articles from the vulcanization molds, and low temperature performance, which is reflected into the sealing properties of "shaft seals", which are more able to follow the eccentricity of the moving shaft when the temperature is lowered.

Among the copolymers of the present invention particularly suitable for preparing articles intended for the contact with gasolines, such as "fuel hoses", are those having the following monomeric composition by weight:

| | |
|---|---|
| VDF | 30-40% |
| HFP | 18-40% |
| PAVE | 3-20% |
| TFE | 15-30% |

the maximum and minimum values of HFP +PAVE being the ones indicated above.

Due to the above indicated monomeric composition, said copolymers are capable of satisfying increasingly severe market specifications, which require good resistance to alcohols and gasolines containing alcohols, in particular methanol.

In particular, said copolymers possess low swelling values and reduced permeability to said alcohols and gasolines, good low temperature and bend test performance, as described in the Nissan Engineering Standards specification: "Fuel hoses for high pressures", 1985 NES D2922.

This specification prescribes a maximum swelling value of 10% in Fuel B (mixture of 70% by volume of isooctane and 30% by volume of toluene) at 40°C for 72 hours, and in terms of low temperature performance, as measured by the "bend test" (ASTM D2136-84) at -40°C, it prescribes no breakage or defect on the surface of the manufactured article.

Tests performed by the Applicant have shown that the copolymers which are preferred for shaft seals can be used also for preparing fuel hoses and satisfy the above indicated specifications.

Experiments carried out by the Applicant have shown that the above indicated maximum swelling value is not achieved with the copolymers of the invention, not even when employing a methanol containing Fuel, such as for example M20 (40% isooctane, 40% toluene and 20% methanol).

The copolymers of the present invention can be prepared by known methods, such as for example those described in Kirk Othmer, Encyclopaedia of Chemical Technology, vol. 8, pages 500 and ff., 1979. In particular, polymerization in bulk, in organic solvents solutions and in emulsion or suspension in water can be used as polymerization methods.

Free radical polymerization initiators which can be used are for example inorganic peroxides, such as ammonium or potassium persulphates, redox systems, such as persulphate disulphite and iron persulphate, organic peroxides such as benzoyl peroxide, dicumylperoxide, diisopropylperoxydicarbonate, and diethylhexyl peroxydicarbonate.

Preferably the preparation is carried out in an aqueous emulsion. Any type of emulsifying agent, perfluorinated or partially fluorinated, or mixtures thereof with hydrogenated emulsifiers, can be used in the process of the invention; an example of emulsifier is given by fluorinated carboxylic acids.

Chain transfer agents which can be used are for example ethyl acetate and diethyl malonate; chain transfer agents containing iodine and/or bromine are also used, such as for instance compounds having general formula Rf(I)ₓ(Br)_{y} (Rf = perfluorinated hydrocarbon radical containing from 1 to 8 carbon atoms; x,y = integers comprised between 0 and 2, with at least x or y = 1 and x+y ≤2).

Alkaline or alkaline earth metal iodides and/or bromides can be used as well, as described in EP-A-407,937.

Polymerization temperatures are comprised between 25°C and 150°C and operating pressures between 0.8 and 8 MPa (8 and 80 atmospheres).

The perfluoroalkylvinylethers (PAVE) to be used in the preparation of the copolymers of this invention are those containing alkyl groups having 1-3 carbon atoms, such as the perfluoromethylvinylether (PMVE), perfluoroethylvinylether (PEVE), and perfluoropropylvinylether (PPVE) .

The PMVE is preferred.

The preparation of the copolymers according to the invention can be advantageously carried out by polymerization in aqueous suspension in the presence of a microemulsion formed by one or more perfluoropolyoxyalkylenes and water, as described in EP-A-247,379 and 250,767.

Vulcanization systems useful for the polymers of the invention are well known and consist of a crosslinking agent and a vulcanization accelerator.

Crosslinking agents are among those described in US-A-4,259,463, 3,876,654 and 4,233,421 and may include aromatic and aliphatic polyhydroxylic compounds.

Representative examples of the aromatic class are di-, tri- and tetrahydroxybenzene, -naphthalene, -anthracene and bisphenol derivatives. Preferred are aromatic compounds which include 4,4',thiodiphenol isopropylene-bis (4-hydroxybenzene) (i.e. Bisphenol A) and hexafluoroisopropylene-bis (4-hydroxybenzene) (i.e. Bisphenol AF), which are described in US-A-4,233,421.

Compounds which can be used as vulcanization accelerators are known and are described in several US Patents, such as, for instance, US-A-3,655,727, 3,712,877, 3,857,807, 3,686,143, 3,933,732, 3,876,654, 4,233,421 and 4,259,463, and in European Patent Applications such as, for instance, EP-A-0,182,299 and 0,120,462. Preferred are the classes of phosphonium and aminophosphonium quaternarium salts as described in US-A-3,876,654 and 4,259,463.

The following examples serve to illustrate the object of the present invention.

The values of releasability of the plaques from the aluminum sheet are defined with A when the release is good, and with B when it is mediocre.

### EXAMPLE 1

A 5 l reactor equipped with a stirrer operating at 630 r.p.m. was used.

3,500 g of water are charged to the reactor under vacuum and the reactor is then brought to pressure by feeding a monomeric mixture having the following molar composition:

| | |
|---|---|
| VDF | 40% |
| HFP | 35% |
| PMVE | 10% |
| TFE | 15% |

The operating temperature is 85°C and the pressure 1.9 relative MPa (19 relative bar).

Thereafter are added, in sequence:
- 4.2 g ammonium persulphate (PSA), dissolved in water.
- 6.4 g ethyl acetate as chain transfer agent, 3.2 g of which at 5% monomer conversion and the remainder subdivided into 4 additions of 0.8 g each, executed at 24%, 43%, 62% and 81% conversion, respectively.

The pressure is maintained constant during the polymerization by feeding the monomers at the following molar ratios:

| | |
|---|---|
| VDF | 61.5% |
| HFP | 14.5% |
| PMVE | 4.0% |
| TFE | 20.0% |

After 46 minutes, 1,580 g of the polymer are obtained. The reactor is cooled, the emulsion discharged and coagulated by adding an aqueous solution of aluminum sulphate.

The polymer is isolated, washed in water and dried in a circulating air oven at 60°C for 24 hours.

Table 1 reports the data concerning the polymer composition, the value of the glass transition temperature T_{g} and of the Mooney viscosity.

Table 2 reports data concerning the formulation used for vulcanizing the polymer, the characteristics of such formulation, as well as the characteristics of the vulcanized polymer, after postvulcanization in oven at 230°C for 24 hours. The vulcanization of the polymer was carried out in press at 170°C for 10 minutes.

### EXAMPLE 2 (comparative)

Operating conditions are as in Example 1, but in this case the reactor pressure is achieved through a monomeric mixture having the following molar composition:

| | |
|---|---|
| VDF | 35% |
| HFP | 53% |
| TFE | 12% |

Pressure is maintained constant during polymerization by feeding a monomeric mixture of the following molar composition:

| | |
|---|---|
| VDF | 61% |
| HFP | 20% |
| TFE | 19% |

After 53 minutes of polymerization, 1,550 g of the polymer are obtained.

Tables 1 and 2 report the data concerning the characteristics of the obtained polymer, the vulcanizing formulation and the vulcanized product.

### EXAMPLE 3

Operating conditions are as in Example 1, with the exception that in this case the reactor pressure is attained through a monomeric mixture having the following molar composition:

| | |
|---|---|
| VDF | 35% |
| HFP | 32% |
| PMVE | 18% |
| TFE | 15% |

The pressure is maintained constant during polymerization by feeding a monomer mixture having the following molar composition:

| | |
|---|---|
| VDF | 52% |
| HFP | 15% |
| PMVE | 7% |
| TFE | 26% |

After 47 minutes of polymerization, 1,514 g of the polymer are obtained.

Tables 3 and 4 report the data concerning the characteristics of the obtained polymer, the vulcanizing formulation and the vulcanized product.

### EXAMPLE 4 (comparative)

Operating conditions are as in Example 1, with the exception that in this case the pressure in the reactor is attained using a monomer mixture having the following molar composition:

| | |
|---|---|
| VDF | 23.5% |
| HFP | 65.0% |
| TFE | 11.5% |

Pressure is maintained constant during polymerization by feeding a monomeric mixture of the following molar composition:

| | |
|---|---|
| VDF | 50% |
| HFP | 26% |
| TFE | 24% |

After 74 minutes of polymerization, 1,585 g of the polymer are obtained.

Tables 3 and 4 report the data concerning the characteristics of the obtained polymer, the vulcanizing formulation and the vulcanized product.

**Table 1**

| Example | 1 | 2 |
|---|---|---|
| | | |
| Polymer Composition (% weight) | | |
| | | |
| VDF | 46.5 | 45.8 |
| HFP | 24.5 | 33.8 |
| PMVE | 7.6 | 0.0 |
| TFE | 21.4 | 20.4 |
| | | |
| Mooney Viscosity (ML (1+10) 121°C) | 57 | 59 |
| | | |
| T_{g} (DSC) (°C) | -25 | -19.3 |

**Table 2**

| Example | 1 | 2 |
|---|---|---|
| Composition of Vulcanizing Formulation: | | |
| | | |
| Polymer | 100 | 100 |
| M1 | 4 | 4 |
| M2 | 1.5 | 1.5 |
| MgO DE | 3 | 3 |
| Ca (OH) ₂ | 6 | 6 |
| MT Black | 30 | 30 |
| | | |
| Formulation Characteristics: | | |
| ODR 177°C ARC ±3 (ASTM D 2084-81) | | |
| | | |
| ML Nm (pounds x inch) | 1.58 (14) | 1.70 (15) |
| MH Nm (pounds x inch) | 11.6 (103) | 9.27 (82) |
| Tₛ₂ (s) | 174 | 183 |
| T'₉₀ (s) | 297 | 372 |
| Crosslinking Yield (MH - ML) | 89 | 67 |
| | | |
| Characteristics of the Product | | |
| (Vulcanized in Press at 170°C for 10 min and Post-Vulcanized at 230°C for 24 hrs) (ASTM D412-83) | | |
| | | |
| M 100 (MPa) | 5.8 | 4.5 |
| C.R. (MPa) | 15.5 | 15.6 |
| A.R. (%) | 207 | 217 |
| Shore A (ASTM D 2240-81) | 73 | 73 |
| | | |
| TR Test (ASTM D1329) | | |
| TR 10% (°C) | -16.5 | -12.6 |
| TR 30% (°C) | -13 | - 9.4 |
| TR 50% (°C) | -11 | - 7.3 |
| | | |
| Chemical Stability Test (in ASTM 3 Oil at 150°C for 24 hrs) | | |
| | | |
| Variation M 100 (%) | -10 | - 7 |
| Variation C.R. (%) | -15 | -14 |
| Variation A.R. (%) | 4 | 0 |
| Volume Variation (%) | 1.6 | 1.9 |
| | | |
| Plaque Release from Aluminum Foil | | |
| (after treatment in press at 170°C for 10 min) | A | A |

| | | |
|---|---|---|
| M1: Master 50% elastomer/50% Bisphenol AF | | |
| M2: Master 70% elastomer/30% Diphenylbenzyl, N-diethylphosphonium chloride | | |

**Table 3**

| Example | 3 | 4 |
|---|---|---|
| | | |
| Polymer Composition (% weight) | | |
| | | |
| VDF | 37.6 | 37.3 |
| HFP | 23.6 | 38.1 |
| PMVE | 13.3 | 0.0 |
| TFE | 25.5 | 24.6 |
| | | |
| Mooney Viscosity (ML (1+10) 121°C) | 53 | 48 |
| | | |
| T_{g} (DSC) (°C) | -18 | -10.5 |

**Table 4**

| Example | 3 | 4 |
|---|---|---|
| Composition of Vulcanizing Formulation: | | |
| | | |
| Polymer | 100 | 100 |
| M1 | 4.5 | 4.5 |
| M2 | 3 | 3 |
| MgO Y | 7 | 7 |
| Ca (OH) ₂ | 3 | 3 |
| MT Black | 20 | 20 |
| Carnauba Wax | 1 | 1 |
| | | |
| Formulation Characteristics: | | |
| ODR 177°C ARC ±3 (ASTM D 2084-81) | | |
| | | |
| ML Nm (pounds x inch) | 1.02 (9) | 1.13 (10) |
| MH Nm (pounds x inch) | 8.36 (74) | 6.89 (61) |
| Tₛ₂ (s) | 183 | 225 |
| T'₉₀ (s) | 354 | 414 |
| Crosslinking Yield (MH - ML) | 65 | 51 |
| | | |
| Characteristics of the Product | | |
| (Vulcanized in Press at 170°C for 10 min and Post-Vulcanized at 230°C for 24 hrs) (ASTM D412-83) | | |
| | | |
| M 100 (MPa) | 3.7 | 3.9 |
| C.R. (MPa) | 14 | 14 |
| A.R. (%) | 241 | 317 |
| Shore A (ASTM D 2240-81) | 68 | 73 |
| | | |
| TR Test (ASTM D1329) | | |
| TR 10% (°C) | -13 | -7 |
| TR 30% (°C) | - 9.5 | -3.8 |
| TR 50% (°C) | - 5.2 | -1 |
| | | |
| Swelling in Fuel B at 40°C for 72 hrs (%) | 6 | 4 |
| Swelling in M20 at 40°C for 72 hrs (%) | 9 | 10 |
| Bend Test | | |
| (at -40°C after vulcanization in press) | no defect | defects |

| | | |
|---|---|---|
| M1: Master 50% elastomer/50% Bisphenol AF | | |
| M2: Master 70% elastomer/30% Diphenylbenzyl, N-diethylphosphonium chloride | | |

## Claims

1. A fluoroelastomeric copolymer, suitable for the preparation of "shaft seals" and "fuel hoses", comprising, by weight:
| | |
|---|---|
| VDF (vinylidene fluoride) | 30-47% |
| HFP (hexafluoropropene) | 18-40% |
| PAVE (perfluoroalkylvinylether) | 3-20% |
| TFE (tetrafluoroethylene) | 10-30% |
the sum of HFP + PAVE having the maximum value of 50% and the minimum value of 27%.

2. A copolymer according to claim 1 comprising by weight:
| | |
|---|---|
| VDF | 30-40% |
| HFP | 18-40% |
| PAVE | 3-20% |
| TFE | 15-30% |

3. A copolymer according to claim 1 comprising by weight:
| | |
|---|---|
| VDF | 40-47% |
| HFP | 18-40% |
| PAVE | 3-12% |
| TFE | 15-25% |

4. Use of copolymers according to claim 1 in the preparation of "shaft seals" and "fuel hoses".

5. "Shaft seals" prepared with copolymers according to claim 3.

6. "Fuel hoses" prepared with copolymers according to claim 2 or 3.

## Patentansprüche

1. Fluorelastomeres Copolymeres, geeignet zur Herstellung von "Wellendichtungen" und "Kraftstoffschläuchen", umfassend, auf das Gewicht bezogen,
| | |
|---|---|
| VDF (Vinylidenfluorid) | 30 bis 47% |
| HFP (Hexafluorpropen) | 18 bis 40% |
| PAVE (Perfluoralkylvinylether) | 3 bis 20% |
| TFE (Tetrafluorethylen) | 10 bis 30% |
wobei die Summe von HFP + PAVE einen Maximalwert von 50 % und einen Minimalwert von 27 % hat.

2. Copolymeres nach Anspruch 1, umfassend, auf das Gewicht bezogen:
| | |
|---|---|
| VDF | 30 bis 40% |
| HFP | 18 bis 40% |
| PAVE | 3 bis 20% |
| TFE | 15 bis 30%. |

3. Copolymeres nach Anspruch 1, umfassend, auf das Gewicht bezogen:
| | |
|---|---|
| VDF | 40 bis 47% |
| HFP | 18 bis 40% |
| PAVE | 3 bis 12% |
| TFE | 15 bis 25%. |

4. Verwendung von Copolymeren nach Anspruch 1 zur Herstellung von "Wellendichtungen" und "Kraftstoffschläuchen".

5. "Wellendichtungen", hergestellt mit Copolymeren nach Anspruch 3.

6. "Kraftstoffschläuche", hergestellt mit Copolymeren nach Anspruch 2 oder 3.

## Revendications

1. Copolymère fluoroélastomère, approprié pour la fabrication de "dispositifs d'étanchéité d'arbres" et de "tuyaux d'essence", comprenant, en poids :
| | |
|---|---|
| VDF (fluorure de vinylidène) | 30-47% |
| HFP (hexafluoropropène) | 18-40% |
| PAVE (perfluoroalkylvinyléther) | 3-20% |
| TFE (tétrafluoroéthylène) | 10-30% |
la somme de HFP + PAVE ayant la valeur maximale de 50% et la valeur minimale de 27%.

2. Copolymère selon la revendication 1, comprenant en poids :
| | |
|---|---|
| VDF | 30-40% |
| HFP | 18-40% |
| PAVE | 3-20% |
| TFE | 15-30% |

3. Copolymère selon la revendication 1, comprenant, en poids :
| | |
|---|---|
| VDF | 40-47% |
| HFP | 18-40% |
| PAVE | 3-12% |
| TFE | 15-25% |

4. Utilisation de copolymères tels que définis à la revendication 1 dans la fabrication de "dispositifs d'étanchéité d'arbres" et de "tuyaux d'essence".

5. "Dispositifs d'étanchéité d'arbres" fabriqués avec des polymères tels que définis à la revendication 3.

6. "Tuyaux d'essence" fabriqués avec des polymères tels que définis à l'une des revendications 2 ou 3.
